# EUROPEAN PATENT SPECIFICATION

(11) **EP 0 827 851 B1**
(45) Date of publication and mention of the grant of the patent: **27.10.2004**
(21) Application number: 97114833.3
(22) Date of filing: 27.08.1997
(51) Int. Cl.: B60G 21/05, B60G 3/26

(54) **Suspension with articulated parallelograms for motor vehicles**
Aufhängung mit gelenkigen Parallelogrammen für Kraftfahrzeuge
Suspension à parallèlogrammes articulés pour véhicules à moteur

(30) Priority: 05.09.1996 IT BO960447
(43) Date of publication of application: 11.03.1998
(73) Proprietor: De Giacomi, Edoardo, 40125 Bologna (IT)
(72) Inventor: De Giacomi, Edoardo, 40125 Bologna (IT)
(74) Representative: Modiano, Guido, Dr.-Ing.

(56) References cited:
- EP-A- 0 319 391
- CH-A- 537 818
- FR-A- 1 559 705
- FR-A- 2 451 281
- FR-A- 2 616 715
- US-A- 3 711 113
- US-A- 4 373 743
- US-A- 4 700 972
- US-A- 4 854 603
- US-A- 4 927 169
- US-A- 5 286 052
- US-A- 5 306 034
- US-A- 5 324 056
- PATENT ABSTRACTS OF JAPAN vol. 017, no. 172 (M-1392), 2 April 1993 & JP 04 331622 A (NISSAN MOTOR CO LTD), 19 November 1992,
- PATENT ABSTRACTS OF JAPAN vol. 017, no. 679 (M-1527), 14 December 1993 & JP 05 229326 A (MITSUBISHI MOTORS CORP), 7 September 1993,
- PATENT ABSTRACTS OF JAPAN vol. 011, no. 155 (M-589), 20 May 1987 & JP 61 285110 A (NISSAN MOTOR CO LTD), 15 December 1986,

## Description

The present invention relates to a suspension with two articulated link arrangements for motor vehicles.

It is known that in motor vehicles it is important that the suspensions allow the wheels (more precisely, the planes of the wheels) to remain constantly perpendicular to the road surface in any loading and trajectory condition of the motor vehicle. Wheels perpendicular to the ground in fact uniformly distribute the pressure on the tread of the tires and thus provide vehicle stability, uniform tire wear, maximum road-holding and preserve the traction effect of the driving wheels even along curves as well as the braking effect of the wheels when entering a curve.

However, since currently used articulated-parallelogram suspensions must take into account many factors, such as variations in static, dynamic and aerodynamic load, conditions of the road surface, etcetera, they are the result of compromises; accordingly, they offer a performance which can be improved. In particular, there is the problem of the different deformation of the tires, for example when the vehicle travels along a curved path in which the inner tires are subjected to less compression than the outer ones. This different deformation causes the fact that the wheels no longer remain perpendicular to the ground along curves.

US-A-5 324 056 discloses a high performance automobile suspension according to the preamble of claim 1.

US-A-5 286 052 discloses a vehicle suspension with floating upper arm.

US-A-4 927 169 discloses a suspension system with constant camber.

US-A-4 854 603 discloses a constant camber suspension system.

US-A-4 700 972 discloses a computerized, central hydraulic, electronic variable suspension.

FR-A-2 616 715 discloses a suspension for a vehicle.

The aim of the present invention is to provide a suspension whereby it is possible to keep the wheels substantially perpendicular to the ground regardless of all the components that affect the vehicle.

Within the scope of this aim, an object of the present invention is to provide a suspension which is structurally simple and therefore economical and reliable in operation.

This aim and this object are achieved with a motor vehicle suspension as defined in independent claim 1.

Further particularities of the invention will become apparent from the following description of some embodiments thereof, illustrated only by way of non-limitative example in the accompanying drawings, wherein:
figure 1 is a schematic view of a motor vehicle suspension in a first embodiment;
figure 2 is a perspective view of the means for coupling the suspension of figure 1 to the chassis of the motor vehicle;
figure 3 is an exploded view of the parts that compose the coupling means of figure 2;
figure 4 is a schematic view of the suspension of figure 1 in an operating condition;
figure 5 is an enlarged-scale view of a detail of figure 4;
figure 6 is a schematic view of the suspension of figure 1 in another operating condition;
figure 7 is a schematic view of a motor vehicle suspension in a second embodiment not comprised by the present invention;
figure 8 is a perspective view of the means for coupling the suspension of figure 7 to the motor vehicle chassis;
figure 9 is an exploded view of the parts that compose the coupling means of figure 8;
figure 10 is a schematic view of the suspension of figure 7 in an operating condition;
figure 11 is an enlarged-scale view of a detail of figure 10;
figure 12 is a view of a suspension according to a third embodiment not comprised by the present invention;
figure 13 is a view of the suspension of figure 12 in an operating condition;
figure 14 is a view of a suspension according to a fourth embodiment not comprised by the present invention;
figure 15 is a view of the suspension of figure 14 in an operating condition;
figure 16 is a view of a suspension according to a fifth embodiment not comprised by the present invention;
figure 17 is a view of the suspension of figure 16 in an operating condition;
figure 18 is a view of a suspension according to a sixth embodiment not comprised by the present invention;
figure 19 is a view of the suspension of figure 18 in an operating condition;
figure 20 is an enlarged-scale view of the means for coupling the suspension to the motor vehicle chassis of figs. 18,19.

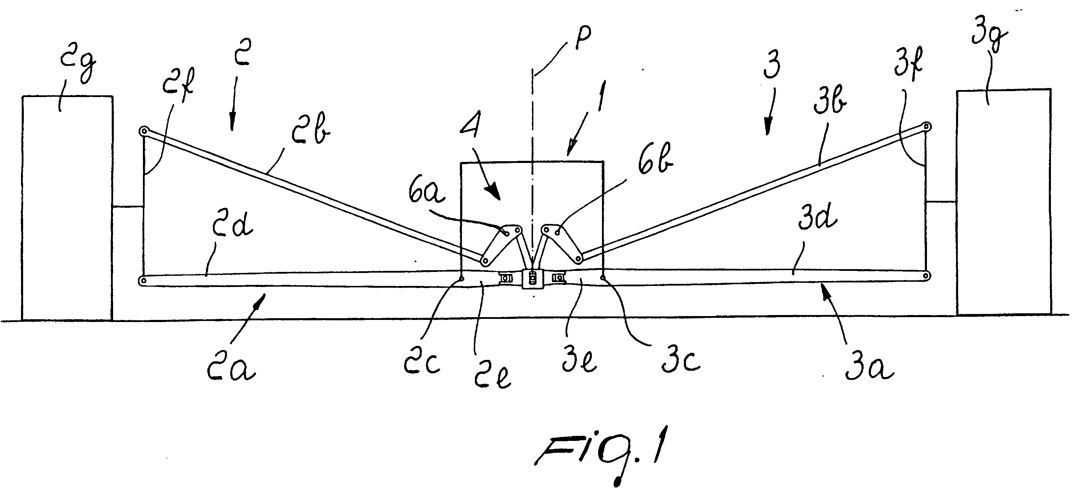

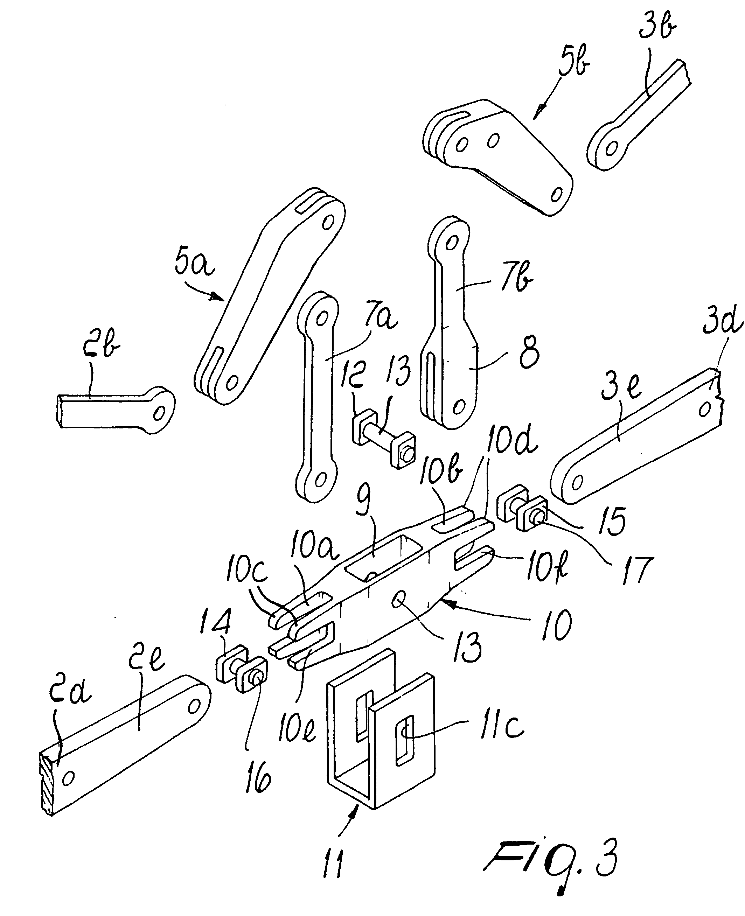

With reference to figures 1 to 3, the reference numeral 1 designates the vehicle chassis, to which the two articulated link arrangements with articulated arms 2 and 3 that compose the suspension according to the invention are applied.

Each articulated link arrangement comprises a lower arm 2a, 2b, which is termed "link" hereinafter for the sake of convenience in description, and an upper arm 2b, 3b, which is termed "strut" hereinafter in order to distinguish it from the lower one. The links 2a, 3a and the struts 2b, 3b, as will become apparent hereinafter, all converge toward a single point which lies on the centerline plane P of the motor vehicle.

The links 2a, 3a are articulated at 2c, 3c to the chassis 1, so that each one has an arm 2d, 3d, which protrudes outward with respect to the fulcrums 2c, 3c, and an arm 2e, 3e, which protrudes inward toward the centerline plane P of the vehicle.

The outer or distal ends, with respect to the plane P, of the arms 2d, 3d are articulately connected to the distal ends of the struts 2b, 3b by elements 2f, 3f for supporting the wheels 2g, 3g.

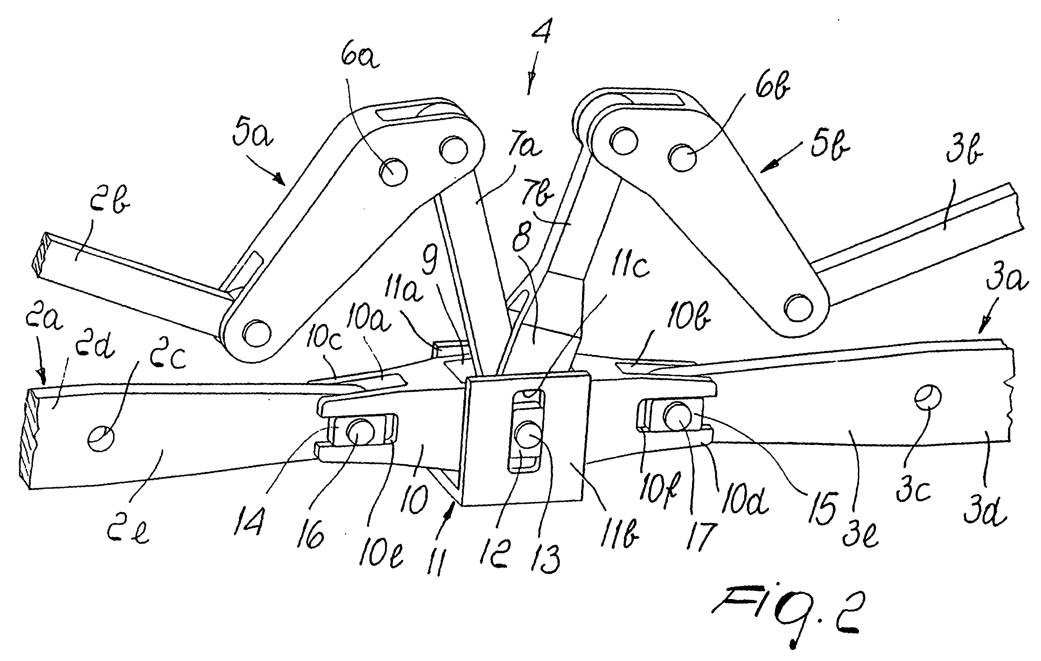

In order to control the suspension 2, 3 so that the wheels 2g, 3g are constantly perpendicular to the ground regardless of the loading conditions of the vehicle and of the attitude of the chassis 1 with respect to the plane P, the links 2a, 3a and the struts 2b, 3b are mutually connected by an articulated system, which is generally designated by the reference numeral 4 and is composed (see figure 2) of two levers 5a, 5b which are pivoted in a rocker-like manner at 6a, 6b to the chassis 1 symmetrically with respect to the plane P.

The struts 2b, 3b are articulated to the outer ends of the levers 5a, 5b relative to the plane P, whilst two levers 7a, 7b, hereinafter termed connecting rods, are articulated to the inner ends and converge downward so as to form a sort of V.

The connecting rod 7b forms, at the end which lies opposite to the one articulated to the lever 5b, a fork 8, between the prongs whereof the connecting rod 7a protrudes.

The fork 8 engages a cavity 9 of a member 10 which is inserted between the walls 11a, 11b of a U-shaped bracket 11 which is rigidly coupled to the chassis 1.

Two respective vertically elongated slots 11c are formed in the walls 11a, 11b and two respective sliders 12 are guided therein: said sliders are mounted at the opposite ends of a pin 13 which passes through the member 10 and the ends of the connecting rods 7a, 7b that are inserted in the cavity 9, so as to articulately join them.

In this manner, the member 10 can perform vertical movements in the slots 11c of the bracket 11 in order to follow the movements of the pin 13 induced by the arms 2e, 3e but it cannot perform lateral movements, i.e., at right angles to the plane P.

Two respective vertical and mutually co-planar slots 10a, 10b are formed at the opposite ends of the member 10, each slot forming two wings 10c, 10d.

Respective horizontally elongated slots 10e, 10f are formed in the wings 10c, 10d and act as a guide for sliders 14, 15 which are articulately mounted on pivots 16, 17 which are driven through the ends of the arms 2e, 3e of the links 2a, 3a. The ends of the arms 2e, 3e are inserted in the slots 10a, 10b, which are deep enough to allow the ends of the arms 2e, 3e to follow the movements of the sliders 14, 15 in the slots 10e, 10f.

It should be noted that the dimensions and arrangement of the levers 5a, 5b and of the connecting rods 7a, 7b are chosen so that the imaginary extension lines of the struts 2b, 3b substantially intersect at the pin 13 for the articulation of the connecting rods 7a, 7b to the member 10, in order to ensure, in any operating condition, that the planes of the wheels are perpendicular to the ground plane.

Operation of the described suspensions is as follows.

If only the load of one or of both suspensions varies, only a movement of the chassis 1 with respect to the ground plane is obtained.

This produces a simple oscillation of the lower links 2a, 3a which by means of the arms 2e, 3e simultaneously or individually lift or lower the member.

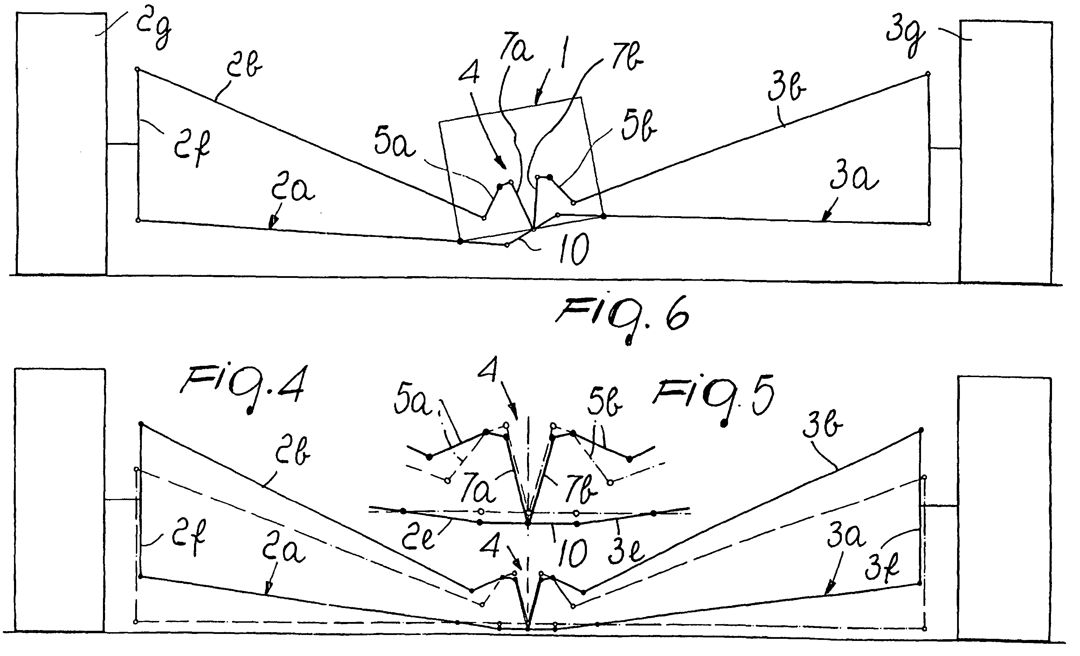

Figures 4 and 5 illustrate the case in which the load increases on both suspensions 2, 3, causing the member 10 to move downward parallel to itself.

This lowering, by means of the connecting rods 7a, 7b, produces an identical oscillation, in opposite directions, of the levers 5a, 5b and therefore an outward thrust of the struts 2b, 3b whose extent is such as to keep the attitude of the elements 2f, 3f and the perpendicular arrangement of the wheels 2g, 3g with respect to the ground substantially unchanged.

If instead the chassis 1 rolls about the longitudinal axis of the vehicle, as shown in figure 6, the links 2a, 3a produce an inclination of the member 10 which produces, by means of the connecting rods 7a, 7b and the levers 5a, 5b, an inward traction on the strut 2b and an outward thrust of the strut 3b, causing the wheels to continue to remain perpendicular to the ground. The lever system 4 that readjusts the attitude of the vehicle in fact does not move with respect to the chassis 1, since the pin 13 does not move at all with respect to the chassis 1.

It is evident that the described suspension perfectly achieves the intended aim and object. In particular, it is noted that the lever system 5a, 5b, 7a, 7b, 10 that mutually connects the upper and lower links of the articulated elements 2 and 3 have a very small mass and therefore do not significantly affect the response of the suspensions. Said lever system, by being concentrated at the center of the motor vehicle, furthermore does not lead to particular aerodynamic problems.

The invention is susceptible of numerous modifications and variations.

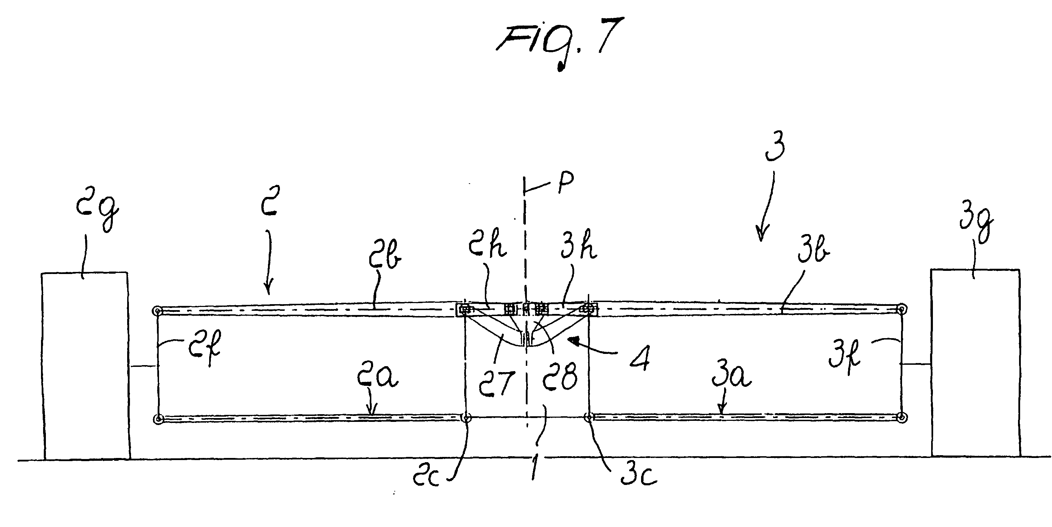

Figures 7, 8, 9 are views of a different embodiment not comprised by the present invention in which the chassis, the wheels and the suspensions are designated by the same reference numerals as in the previous example.

However, the suspensions 2, 3 are different, in that the quadrilateral elements with articulated arms are constituted by two articulated parallelograms, each whereof comprises the two lower links 2a, 3a, the two upper struts 2b, 3b, the two elements 2f, 3f for supporting the wheels 2g, 3g, the chassis 1 and the articulated system 4.

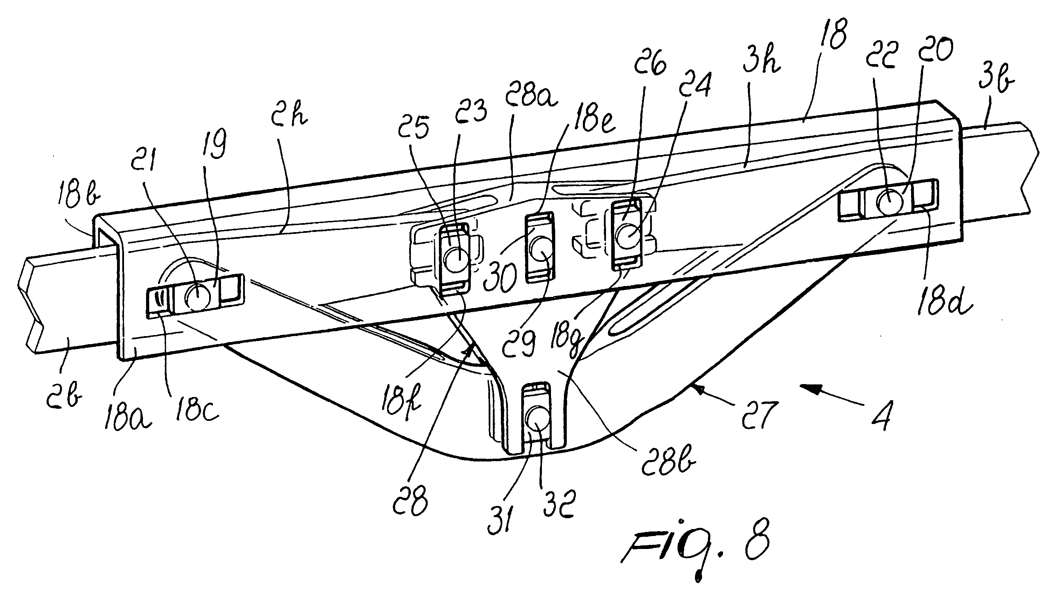

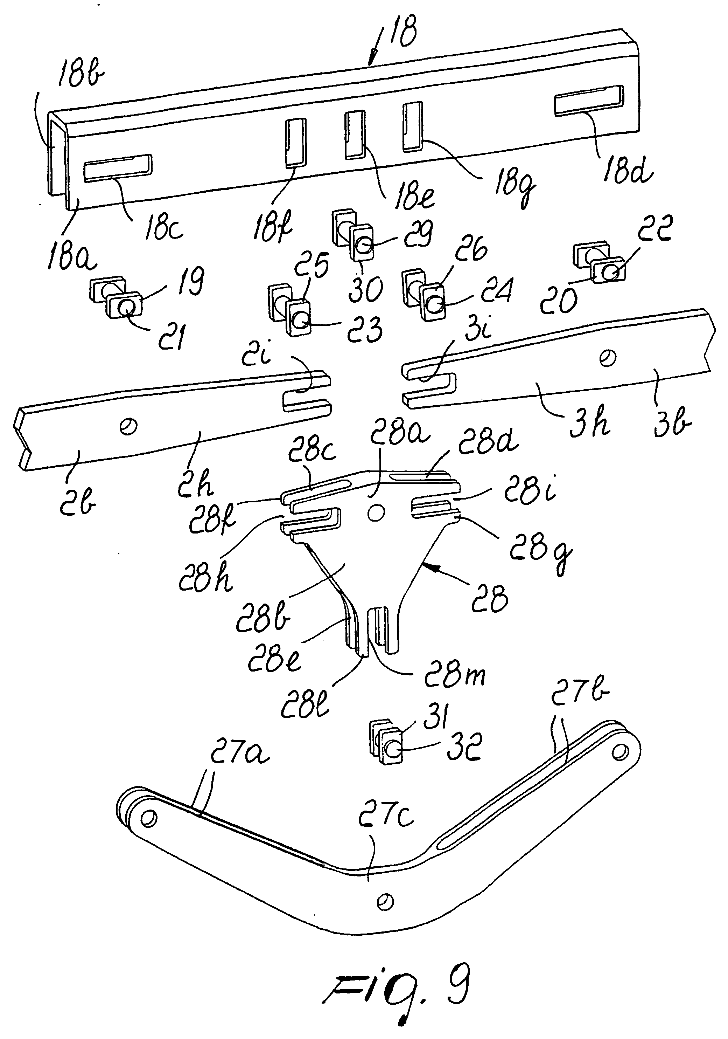

More specifically, a bracket 18 is fixed to the chassis 1 (see figures 8, 9) and is provided by means of a profiled element having a U-shaped cross-section which is open downward and has two walls 18a, 18b in which there are provided pairs of horizontally elongated slots 18c and 18d at the opposite ends of the bracket and there are provided two vertically elongated slots 18e at the center. Two additional pairs of vertically elongated slots 18f and 18g are formed to the sides of the central pair 18e and are equidistant from the slots 18e.

Respective pairs of sliders 19, 20 are slidingly engaged in the end slots 18c and 18d and are articulately coupled to the opposite ends of pins 21, 22 which pass through arms 2h, 3h of the struts 2b, 3b which lie between the walls 18a, 18b of the bracket 18.

Slots 2i and 3i are formed in the ends of the arms 2h, 3h and are aligned with the respective pins 21, 22; pins 23, 24 are engaged in said slots. Each pin 23, 24 articulately supports, at its opposite ends, two sliders 25, 26 which are guided in the slots 18f and 18g.

The reference numeral 27 designates a bar which is shaped like a very wide V and mutually connects the struts 2b, 3b. The bar 27 is provided, at its opposite ends, with two forks 27a, 27b the prongs whereof fit between the arms 2h and 3h of the struts 2b, 3b and the walls 18a, 18b of the bracket 18 and are articulated to the pins 21, 22.

The ends of the arms 2h, 3h protrude through the forks 27a, 27b toward the centerline plane P inside the bracket 18 and are kinematically connected to each other and to the bar 27 by a triangular body 28. More particularly, the body 28 can be thought of as being composed of an upper horizontal portion 28a, which is termed "member" by analogy with the member 10 of the previously described example, and of an extension 28b which protrudes downward from the median region of the member 28a, so that the body 28 is mechanically equivalent to a T-shaped lever.

The triangular body 28 is crossed, at the center of the member 28a, by a pin 29 which articulately supports, at its opposite ends, two sliders 30 which slidingly engage the slots 18e of the bracket 18.

Slots 28c, 28d are formed in the opposite ends of the member 28a and the arms 2h and 3h of the struts 2b, 3b are inserted in said slots.

An additional slot 28e which is co-planar to the preceding ones is formed at the lower end of the extension 28b and the central region 27c of the bar 27, which acts as a connecting portion between the forks 27a, 27b, is driven through said slot 28e.

The slots 28c, 28d form, in each one of the opposite ends of the member 28a, two wings 28f, 28g which are affected by mutually aligned slots 28h, 28i which are open outward. The wings 28f, 28g are inserted between the arms 2h, 3h of the struts 2b, 3b and the walls 18a, 18b of the bracket 18, so that the pins 23, 24, pass through the slots 28h, 28i as well as through the slots 2i, 3i.

The slot 28e also forms two wings 28l which straddle the region 27c of the bar 27 and in which there are provided two vertically elongated slots 28m. Respective sliders 31 are guided in the slots 28m and are articulately fitted on a pin 32 which passes through the central region 27c of the bar 27.

With the suspension described in figures 7-11, a balanced increase in the load on the two wheels causes a simple oscillation of the links 2a, 3a and of the struts 2b, 3b about the fulcrums 2c, 3c and 21, 22 respectively, whilst the body 28 oscillates vertically without rotating and the bar 27 does not move. In this case, the wheels remain perfectly perpendicular to the ground.

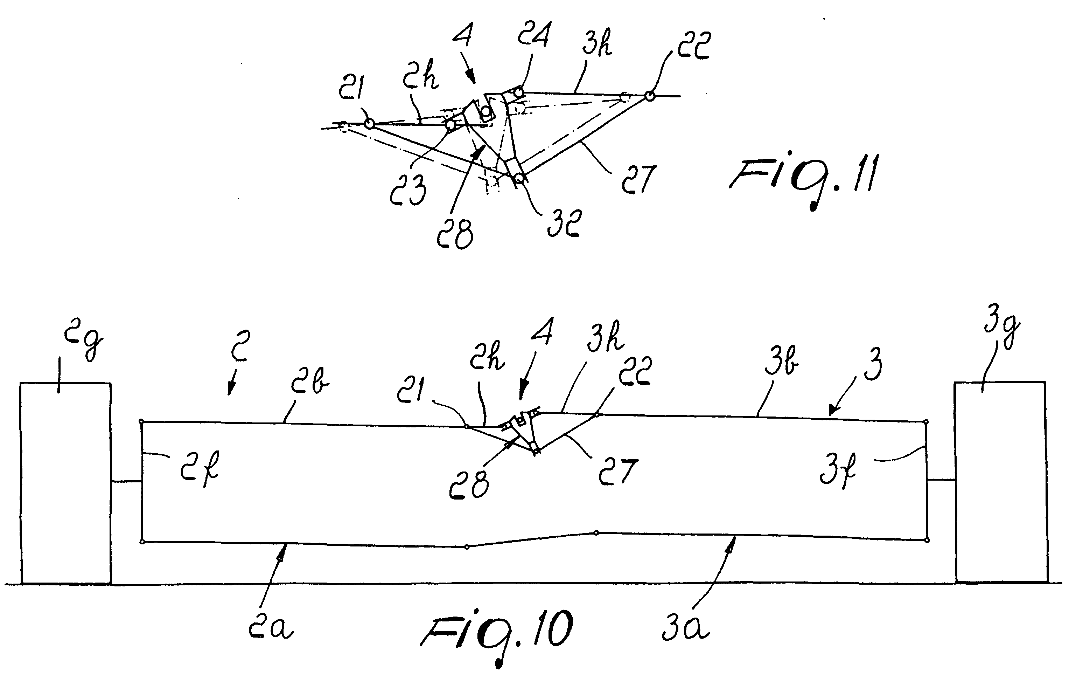

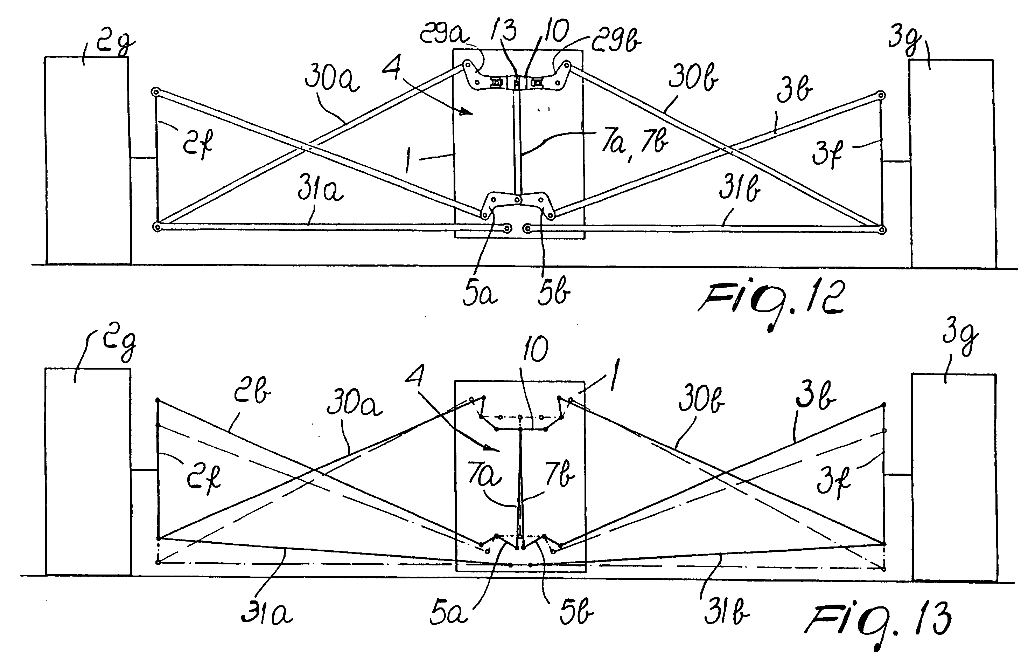

However, when the longitudinal plane of the chassis 1 undergoes a lateral inclination (see figures 10, 11), the arms 2h, 3h, by acting on the body 28, cause a rotation thereof which produces a lateral movement of the bar 27 and accordingly an equally orientated displacement of the sliders 19, 20 along the slots 18c, 18d and of the struts 2b, 3b toward the side of the chassis that tends to rise from the ground.

Moreover, the length of the extension 28 and of the portions 2h, 3h and the distance of the slots 18f and 18g from the central slot 18 are chosen so as to leave the planes of the wheels 2g, 3g perpendicular to the ground.

When the chassis 1 returns to a vertical position, the rotation of the body 28 returns the struts 2b, 3b to an equilibrium position with respect to the centerline plane P.

The embodiment of figure 12 substantially duplicates the one shown in figures 1 to 6, with upper struts 2b, 3b and lower links 31a, 31b (which are equivalent to the links 2a, 3a of the embodiment of figures 1-6) which converge in a point of the centerline plane P, but with the difference that the member 10 of the articulated system 4, instead of being arranged below the levers 5a, 5b, to which it is articulately connected by respective connecting rods 7a, 7b (in figure 12, the connecting rods 7a, 7b are superimposed), are arranged above said levers.

The two bars 30a, 30b are articulately connected, by means of rockers 29a, 29b pivoted in the chassis 1 of the motor vehicle, to the opposite ends of the member 10. The distal ends of the bars 30a, 30b and the respective distal ends of the struts 2b, 3b are connected by the elements 2f, 3f that support the wheels 2g, 3g.

Figure 13 illustrates the operation of the suspension in the case of a balanced load on the wheels 2g, 3g, during which the wheels remain perpendicular to the ground. The perpendicular arrangement of the wheels persists even in case of a lateral inclination of the chassis 1. In this case, the two bars 30a, 30b in fact cause, by means of the rockers 29a, 29b, the inclination of the member 10 of the articulated system 4 without however modifying the position of the pin 13 of the member, which remains substantially unchanged.

As mentioned, in fact, for the movement shown in figure 6, since the pin 13 does not move at all with respect to the chassis 1, the entire articulated system 4 composed of the rockers 29a and 29b, the member 10, the connecting rods 7a, 7b and the levers 5a, 5b remains rigidly coupled to the chassis 1.

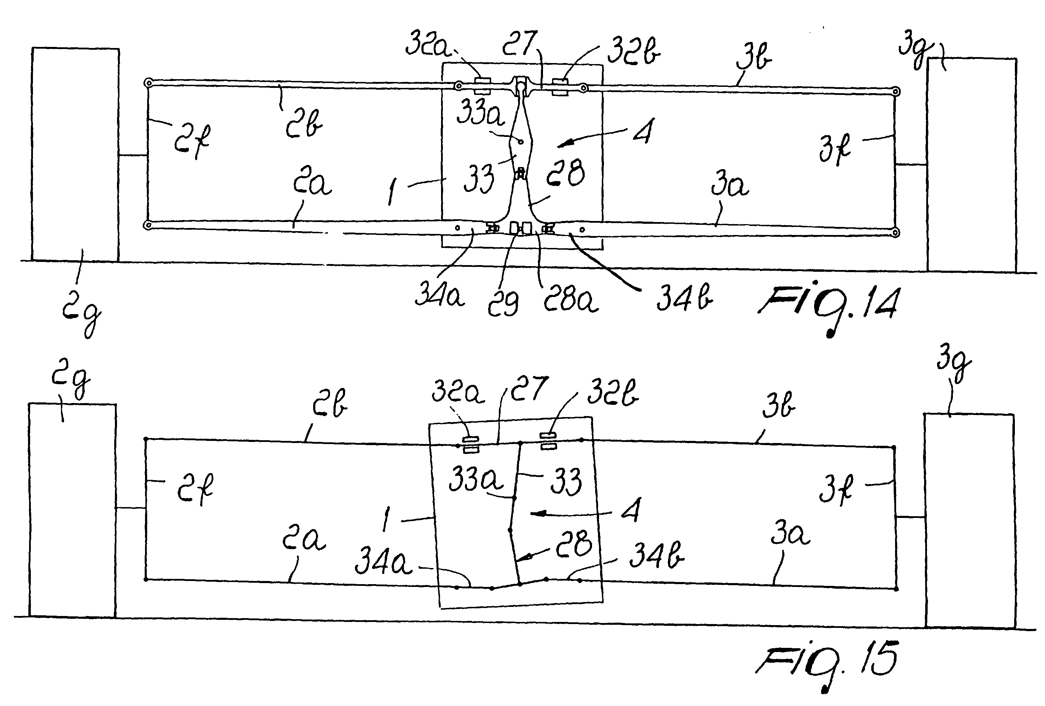

The embodiment of figure 14 not comprised by the present invention is a variation of the embodiment shown in figures 7-11, with respect to which the displacement of the struts 2b, 3b is derived from the oscillation of the lower links 2a, 3a.

For this purpose, the struts 2b, 3b are articulately connected to a bar 27 which can slide in guiding bushes 32a, 32b which are rigidly coupled to the chassis 1. Said bar, being similar to the bar 27 of the example of figures 7-9, is designated by the same reference numeral 27. The end of a rocker 33 which rotates about a fulcrum 33a is articulately coupled to the center of the bar 27. The opposite end of the rocker 33 is articulately connected to a body of the articulated system 4 which, by analogy with the embodiment of figures 7-11, is designated by the reference numeral 28 and comprises a member 28a which has a pin 29 slideable in a vertical slot formed in the vehicle chassis. The opposite ends of the member 28a are rigidly coupled to arms 34a, 34b of the lower links 2a, 3a.

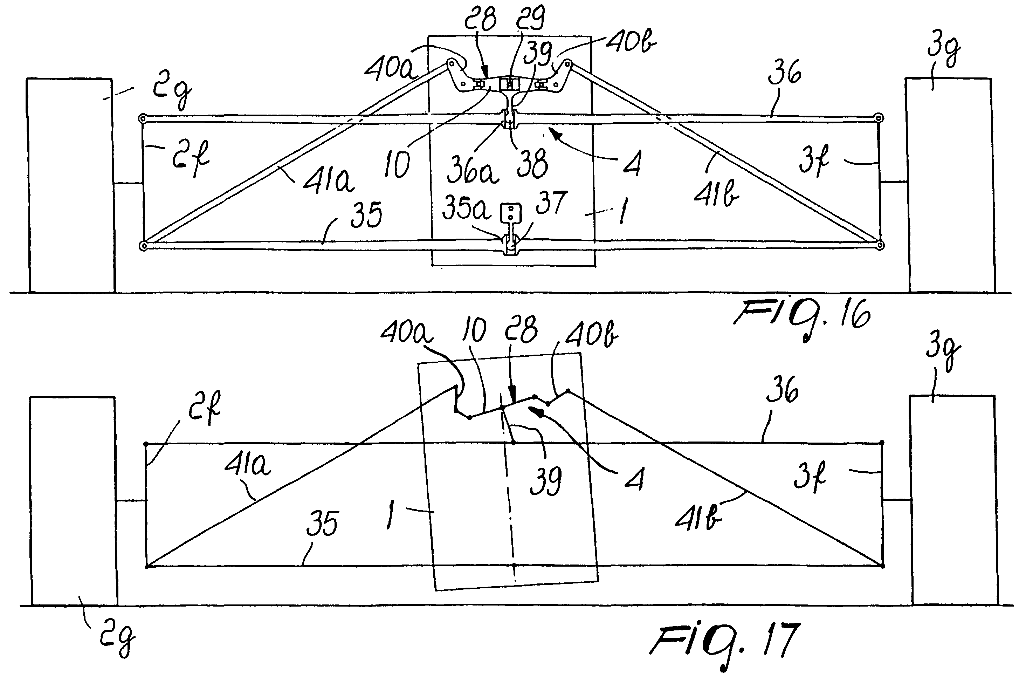

Operation of the suspension of figure 14 is fully identical to that of the suspension of figure 7. In particular, when the chassis 1 is inclined, as shown in figure 15, the body 28 oscillates and the rocker 33 rotates accordingly. The bar 27 therefore performs a sliding movement which helps to keep the plane of the wheels 2g, 3g perpendicular to the ground.

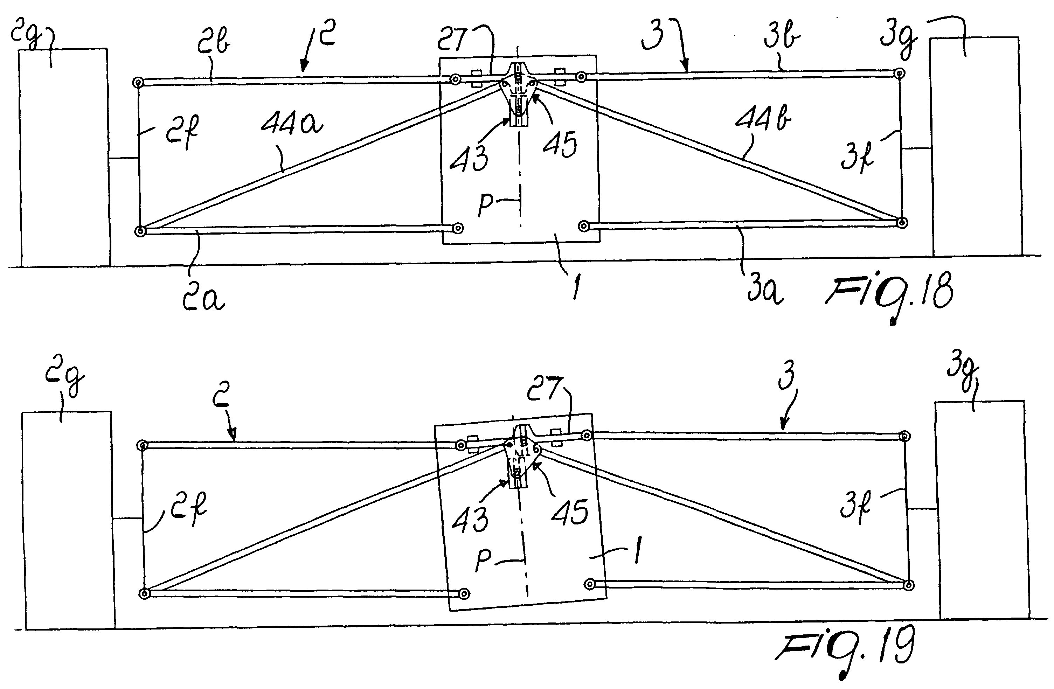

A further different embodiment not comprised by the present invention is shown in figure 16. The illustrated suspension, which has the particularity that it keeps the gauge constant, comprises a parallelogram which is composed of a lower bar 35 and an upper bar 36 in which the distal ends are articulately connected by elements 2f, 3f for supporting the wheels 2g, 3g.

The bars 35, 36 are centrally provided with guides 35a, 36a which are perpendicular to said bars and in which respective sliders, constituted by spherical heads 37, 38, are slidingly engaged. The head 37 is fixed to the vehicle chassis 1. The head 38 is instead rigidly coupled to the vertical portion 39 of a T-shaped body which is part of the articulated system 4 which, by analogy with the bodies of the previous examples, is generally designated by the reference numeral 28.

The body 28 comprises a member 10 which has, at its center, a pivot 29 which slides in a vertical slot formed in the vehicle chassis.

The opposite ends of the member are articulately connected to the respective arms of two levers 40a, 40b of the two-arm type, the fulcrum whereof is located in the chassis 1, the levers being mirror-symmetrical with respect to the centerline plane P.

The other two arms of the levers 40a, 40b are connected to links 41a, 41b which are articulated in the same points in which the bar 35 is articulated to the elements 2f, 3f.

In balanced loading conditions, the guides 35a, 36a remain perfectly vertically aligned during the movements of the quadrilateral element 35, 36 with respect to the chassis 1. The vertical movements of the bar 35, transmitted to the levers 40a, 40b by the links 41a, 41b, in fact produce identical oscillations of the levers 40a, 40b and therefore cause the vertical sliding of the head 38 in the guide 36a without producing lateral thrusts on the bar 36.

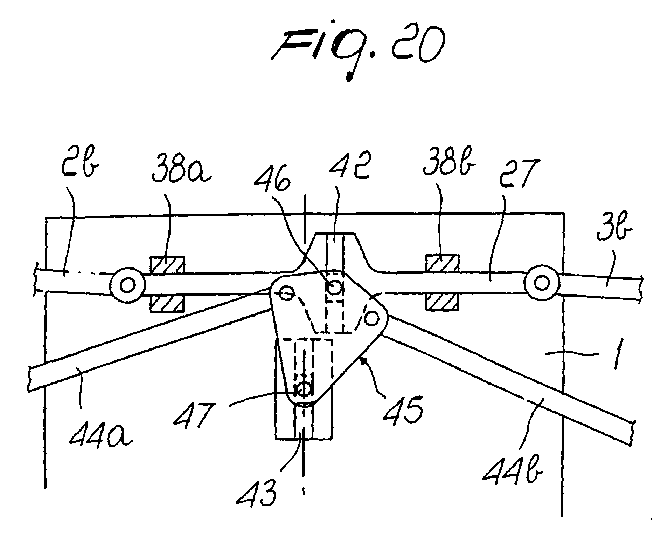

If instead the chassis 1 is inclined (see figure 17), the links 41a, 41b, by means of the levers 40a, 40b, cause a rotation of the body 28 which, through the engagement of the head 38 in the guide 36a, causes a lateral movement of the bar 36 whose extent ensures that the wheels remain perpendicular to the ground.

The suspension illustrated in figures 18-20 not comprised by the present invention comprises two articulated parallelograms 2, 3 composed of two lower links 2a, 3a, the inner ends whereof are articulated to the chassis 1, and of two upper struts 2b, 3b. The outer ends of the links and of the struts are mutually connected by the elements 2f, 3f that support the wheels 2g, 3g. The inner ends of the struts 2b, 3b are mutually connected by the bar 27, which can slide in supports 38a, 38b rigidly coupled to the chassis 1.

The bar 27 has a vertical guide 42 which is parallel to the centerline plane P and is suitable to be aligned, in a centerline position, with an underlying guide 43 which is rigidly coupled to the chassis 1.

Two bars 44a, 44b are articulated to the outer ends of the links 2a, 3a, run diagonally inside the parallelograms 2, 3, and are articulately connected to each other by means of a diamond-shaped body 45 whose function is similar to that of the body 28 of the previous embodiments. The articulation points of the bars 44a, 44b are arranged at the opposite ends of the imaginary horizontal diagonal of the body 45. At the opposite ends of the vertical diagonal of the body 45 there are provided two pins 46, 47 which are slidingly engaged in the guides 42, 43.

Operation of the suspension of figures 18-20 is similar to that of the previously described examples. Whilst the wheels remain perfectly perpendicular to the ground when the load is balanced, when the vehicle travels along curves the body 45 oscillates with respect to the chassis 1 so as to move the bar 27 in a way which restores the perpendicular arrangement of the wheels.

In the embodiments of figures 14-17, the use of the spherical head-slider couplings is not binding: it can be replaced by the pin-sliders-slots coupling used in the embodiments 1-11, improving the quality of the execution.

In all the embodiments, in the pin and slot coupling between two parts it is not necessary for the pin to belong to the part 1 and for the slot to belong to the part 2; their association may be swapped.

The common factor in all the embodiments is:
-- the presence of the member 10 (which in the embodiments of figures 7, 14, 16 is constituted by the horizontal part with two mutually opposite arms of the triangular body 28), which is meant to detect the vertical movements of the two wheels (identical movements produce a pure vertical oscillation of the member 10, opposite movements produce a simple rotation thereof);
-- and the presence of an articulated system which can vary on a case-by-case basis and is generally designated by the reference numeral 4 in the figures, and which by taking the movement of the member 10 as input moves appropriately, acting as an element for compensating the error induced by the suspension and thus keeping the planes of the wheels substantially perpendicular to the ground.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A motor vehicle suspension with two articulated link arrangements, each whereof comprises an upper link (2b, 3b) and a lower link (2a, 3a), the outer ends of said lower links being articulately connected to respective elements (2f, 3f) for supporting a respective wheel (2g, 3g), the inner ends of said lower links (2a, 3a) being articulated to the vehicle chassis (1), **characterized in that** said upper (2b, 3b) and lower (2a, 3a) links are substantially converging towards a single point which lies on the centerline plane (P)of the vehicle chassis and **in that** the inner ends of said upper links (2b, 3b) are operatively connected to lever means (4) mounted on said chassis and responsive to allow movements of said inner ends with a horizontal component and a vertical component whose extents are proportional to the variations of the distance and attitude of the chassis with respect to the ground and are such as to keep the wheels (2g, 3g) substantially perpendicular to the ground.

2. The suspension according to claim 1, **characterized in that** said lower links (2a, 3a) have respective arms (2e, 3e) protruding from their articulation on the vehicle chassis (1) towards the centerline (P) of the vehicle chassis (1) and are articulately connected to the opposite ends of a substantially horizontal member (10) which is centrally articulated to said chassis, said fulcrum being defined by a pin (13) guided on the chassis, so as to perform movements along said plane (P), the ends of two connecting rods (7a, 7b) being articulately connected to said pin (13), the opposite ends of said connecting rods being articulately connected to respective arms of levers (5a, 5b) which are pivoted in a rocker-like manner to said chassis (1), said rocker levers having opposite arms to which said upper links (2b, 3b) are articulated, said connecting rods (7a, 7b) and said levers being sized so that said upper links converge substantially toward said pin (13) of said member (10), in order to ensure that the planes of the wheels (2g, 3g) are perpendicular to the ground in any operating condition of the suspension.

3. The suspension according to claim 1, **characterized in that** two respective bars (30a, 30b) are articulated to the outer ends of said lower links (31a, 31b), their inner ends being articulately connected, by means of two respective levers (29a, 29b) which are pivoted in a rocker-like manner to the vehicle chassis (1), to the opposite ends of a substantially horizontal member (10) which is centrally articulated to said chassis at a point which lies on the centerline plane (P) of said chassis so as to move on said plane, said member (10) having a pin (13) to which the ends of two connecting rods (7a, 7b) are articulated, the opposite ends of said connecting rods being articulately connected to respective arms of two additional levers (5a, 5b) which are pivoted in a rocker-like manner to said chassis, said rocker-like levers (5a, 5b) having opposite, arms to which said upper links (2b, 3b) are articulated, said levers (5a, 5b) and said connecting rods (7a, 7b) being sized so as to ensure that the planes of the wheels are perpendicular to the ground in any operating condition of the suspension.

4. The suspension according to claim 2, **characterized in that** said connecting rods (7a,7b) are articulately connected to said member (10) by a pin (13) which has, at its opposite ends, sliders (12) slideable in vertical slots (11c) of a bracket (11) which is rigidly coupled to the chassis (1) of the vehicle and **in that** the opposite ends of the arms (2e,3e) of said lower links (2a, 3a) are provided with pins (16, 17) supporting sliders (14,15) which are slidable in slots (10e, 10f) of said member (10) perpendicular to said vertical slots (11c).

## Patentansprüche

1. Aufhängung für ein Motorfahrzeug mit zwei gelenkigen Verbindungsanordnungen, von denen jede ein oberes Verbindungselement (2b, 3b) und ein unteres Verbindungselement (2a, 3a) aufweist, wobei die äußeren Enden der besagten unteren Verbindungselemente jeweils gelenkig mit Elementen (2f, 3f) zum Tragen jeweils eines Rads (2g, 3g) verbunden sind, wobei die inneren Enden der besagten unteren Verbindungselemente (2a, 3a) an dem Fahrzeugchassis (1) angelenkt sind, **dadurch gekennzeichnet, dass** die besagten oberen (2b, 3b) und unteren (2a, 3a) Verbindungselemente im wesentlichen zu einem einzigen Punkt zusammenlaufen, der auf der Mittelebene (P) des Fahrzeugschassis liegt, und dass die inneren Enden der besagten oberen Verbindungselemente (2b, 3b) funktionsmäßig mit an dem besagten Chassis angebrachten Hebelmitteln (4) verbunden sind, die so wirken, dass sie Bewegungen der besagten inneren Enden mit einer horizontalen Komponente und einer vertikalen Komponente erlauben, deren Beträge proportional zu den Variationen des Abstands und der Stellung des Chassis relativ zum Untergrund und so gestaltet sind, dass die Räder (2g, 3g) im wesentlichen senkrecht zum Untergrund gehalten werden.

2. Aufhängung nach Anspruch 1, **dadurch gekennzeichnet, dass** die besagten unteren Verbindungselemente (2a, 3a) jeweils Arme (2e, 3e) aufweisen, die von ihrer Anlenkung am Fahrzeugchassis (1) zur Mittelebene (P) des Fahrzeugchassis (1) hin gerichtet und gelenkig mit den entgegengesetzten Enden eines im wesentlichen horizontalen Elements (10) verbunden sind, das mittig an dem besagten Chassis angelenkt ist, wobei der besagte Drehpunkt durch einen am Chassis geführten Stift (13) definiert wird, um Bewegungen entlang der besagten Ebene (P) auszuführen, wobei die Enden von zwei Verbindungsstreben (7a, 7b) gelenkig mit dem besagten Stift (13) verbunden sind, wobei die entgegengesetzten Enden der besagten Verbindungsstreben gelenkig jeweils mit Hebelarmen (5a, 5b) verbunden sind, die wippenartig drehbar an dem besagten Chassis (1) angelenkt sind, wobei die besagten wippenartigen Hebel entgegengesetzte Arme aufweisen, an denen die besagten oberen Verbindungselemente (2b, 3b) angelenkt sind, wobei die besagten Verbindungsstreben (7a, 7b) und die besagten Hebel so dimensioniert sind, dass die besagten oberen Verbindungselemente im wesentlichen zu dem besagten Stift (13) des besagten Elements (10) hin zusammenlaufen, um sicherzustellen, dass die Ebenen der Räder (2g, 3g) in jedem Betriebszustand der Aufhängung senkrecht zum Untergrund stehen.

3. Aufhängung nach Anspruch 1, **dadurch gekennzeichnet, dass** zwei Streben (30a, 30b) jeweils an den äußeren Enden der besagten unteren Verbindungselemente (31a, 31b) angelenkt sind, wobei ihre inneren Enden mittels jeweils zweier Hebel (29a, 29b), die wippenartig drehbar am Fahrzeugchassis (1) angelenkt sind, gelenkig mit den entgegengesetzten Enden eines im wesentlichen horizontalen Elements (10) verbunden sind, das mittig an dem besagten Chassis an einem Punkt angelenkt ist, der in der Mittelebene (P) des besagten Chassis liegt, um sich in der besagten Ebene zu bewegen, wobei das besagte Element (10) einen Stift (13) aufweist, an dem die Enden von zwei Verbindungsstreben (7a, 7b) abgelenkt sind, wobei die entgegengesetzten Enden der besagten Verbindungsstreben gelenkig jeweils mit zwei zusätzlichen Hebelarmen (5a, 5b) verbunden sind, die wippenartig drehbar an dem besagten Chassis angelenkt sind, wobei die besagten wippenartigen Hebel (5a, 5b) entgegengesetzte Arme aufweisen, an denen die besagten oberen Verbindungselemente (2b, 3b) angelenkt sind, wobei die besagten Hebel (5a, 5b) und die besagten Verbindungsstreben (7a, 7b) so dimensioniert sind, um sicherzustellen, dass die Ebenen der Räder in jedem Betriebszustand der Aufhängung senkrecht zum Untergrund stehen.

4. Aufhängung nach Anspruch 2, **dadurch gekennzeichnet, dass** die besagten Verbindungsstreben (7a, 7b) gelenkig mit dem besagten Element (10) durch einen Stift (13) verbunden sind, der an seinen entgegengesetzten Enden in vertikalen Schlitzen (11c) eines fest mit dem Chassis (1) des Fahrzeugs verbundenen Bügels (11) gleitende Gleitelemente (12) aufweist, und dass die entgegengesetzten Enden der Arme (2e, 3e) der besagten unteren Verbindungselemente (2a, 3a) mit Gleitelemente (14, 15) tragenden Stiften (16, 17) versehen sind, die in Schlitzen (10e, 10f) des besagten Elements (10) senkrecht zu den besagten Schlitzen (11c) gleiten können.

## Revendications

1. Suspension pour véhicules à moteur dotée de deux agencements de liaisons articulées, chacune comprenant une liaison supérieure (2b, 3b) et une liaison inférieure (2a, 3a), les extrémités externes desdites liaisons inférieures étant connectées de manière articulée à des éléments respectifs (2f, 3f) permettant de soutenir une roue respective (2g, 3g), les extrémités internes desdites liaisons inférieures (2a, 3a) étant articulées sur ledit châssis du véhicule (1), **caractérisée en ce que** lesdites liaisons supérieures (2b, 3b) et inférieures (2a, 3a) convergent sensiblement vers un point unique qui se situe sur le plan de la ligne médiane (P) du châssis du véhicule et **en ce que** les extrémités internes desdites liaisons supérieures (2b, 3b) sont connectées de manière opérationnelle aux dits moyens de levier (4) montés sur ledit châssis et réagissent afin de permettre les mouvements desdites extrémités internes avec un composant horizontal et un composant vertical dont l'étendue est proportionnelle aux variations de la distance et de l'attitude du châssis par rapport au sol et elles sont conçues de manière à garder les roues (2g, 3g) sensiblement perpendiculaires par rapport au sol.

2. Suspension selon la revendication 1, **caractérisée en ce que** lesdites liaisons articulées (2a, 3a) ont des bras respectifs (2e, 3e) faisant saillie depuis leur articulation sur le châssis du véhicule (1) vers la ligne médiane (P) du châssis du véhicule et elles sont connectées de manière articulée aux extrémités opposées d'un élément sensiblement horizontal (10) qui est articulé de manière centrale sur ledit châssis, ledit pivot étant défini par une tige (13) guidée sur le châssis, de manière à effectuer des mouvements le long dudit plan (P), les extrémités de deux bielles (7a, 7b) étant connectées de manière articulée à ladite tige (13), les extrémités opposées desdites bielles étant connectées de manière articulée à des bras de levier respectifs (5a, 5b) qui pivotent à la manière d'un culbuteur sur ledit châssis (1), lesdits leviers-culbuteurs ayant des bras opposés sur lesquels lesdites liaisons supérieures (2b, 3b) sont articulées, lesdites bielles (7a, 7b) et lesdits leviers étant dimensionnés de telle sorte que les liaisons supérieures convergent sensiblement vers ladite tige (13) dudit élément (la), afin de faire en sorte que les plans des roues (2g, 3g) soient perpendiculaires au sol dans toutes les conditions de fonctionnement de la suspension.

3. Suspension selon la revendication 1, **caractérisée en ce que** deux barres respectives (30a, 30b) sont articulées sur les extrémités externes desdites liaisons inférieures (31a, 31b), leurs extrémités internes étant connectées de manière articulée, au moyen de deux leviers respectifs (29a, 29b) qui pivotent à la manière d'un culbuteur sur le châssis du véhicule (1), aux extrémités opposées d'un élément sensiblement horizontal (10) qui est articulé de manière centrale sur ledit châssis en un point qui se situe sur le plan de la ligne médiane (P) dudit châssis, de manière à avancer sur ledit plan, ledit élément (10) ayant une tige (13) sur laquelle les extrémités des deux bielles (7a, 7b) sont articulées, les extrémités opposées desdites bielles étant connectées de manière articulée aux bras respectifs de deux leviers supplémentaires (5a, 5b) qui pivotent à la manière d'un culbuteur sur ledit châssis, lesdits leviers ressemblant à un culbuteur (5a, 5b) ayant des bras opposés sur lesquels lesdites liaisons supérieures (2b, 3b) sont articulées, lesdits leviers (5a, 5b) et lesdites bielles (7a,7b) étant dimensionnés de manière à faire en sorte que les plans des roues soient perpendiculaires au sol dans toutes les conditions de fonctionnement de la suspension.

4. Suspension selon la revendication 2, **caractérisée en ce que** lesdites bielles (7a, 7b) sont connectées de manière articulée audit élément par une tige (13) qui comporte, à ses extrémités opposées, des curseurs (12) pouvant coulisser dans des fentes verticales (11c) d'un support (11) qui est couplé de manière rigide avec le châssis (1) du véhicule et **en ce que** les extrémités opposées des bras (2e, 3e) desdites liaisons inférieures (2a, 3a) sont dotées de tiges (16, 17) soutenant des curseurs (14, 15) qui peuvent coulisser dans des fentes (10e, 10f) dudit élément (10) perpendiculaire aux dites fentes verticales (11c).
